# DEMANDE DE BREVET EUROPEEN

(11) **EP 4 838 121 A1**
(43) Date de publication de la demande: **11.11.2026**
(21) Numéro de dépôt: 26175374.3
(22) Date de dépôt: 29.04.2026
(51) Int. Cl.: F16L 13/10, F16L 13/11

(54) **CANALISATION COMPRENANT AU MOINS UN SYSTÈME DE LIAISON PAR COLLAGE RELIANT UN CONDUIT ET UN EMBOUT DE RACCORDEMENT DE MANIÈRE COAXIALE**

(30) Priorité: 06.05.2025 FR 2504811
(71) Demandeur: Airbus Operations S.A.S., 31060 Toulouse (FR)
(72) Inventeur: MILLET, Gérard, 31060 TOULOUSE Cedex 9 (FR); SAINT-AROMAN, Stéphane, 31060 TOULOUSE Cedex 9 (FR)
(74) Mandataire: Airbus-OPS SAS

(57) **Abrégé**

L'invention a pour objet une canalisation 20 comprenant au moins un système de liaison 30 qui relie un conduit 22 et un embout de raccordement 24 positionné autour du conduit 22 et comprenant au moins un logement 34' configuré pour loger une zone de colle reliant le conduit 22 et l'embout de raccordement 24 ; chaque logement 34' étant délimité par au moins un chant intégré à au moins un élément parmi le conduit 22, l'embout de raccordement 24 et au moins un élément intercalaire 36, la surface extérieure S22 du conduit 22 et la surface intérieure de l'embout de raccordement 24 présentant sensiblement le même diamètre ou le système de liaison 30 comprenant au moins un élément intercalaire 36 situé au moins partiellement entre le conduit 22 et l'embout de raccordement 24, en contact simultanément avec ces deux éléments.

## Description

La présente demande se rapporte à une canalisation comprenant au moins un système de liaison par collage reliant un conduit et un embout de raccordement de manière coaxiale.

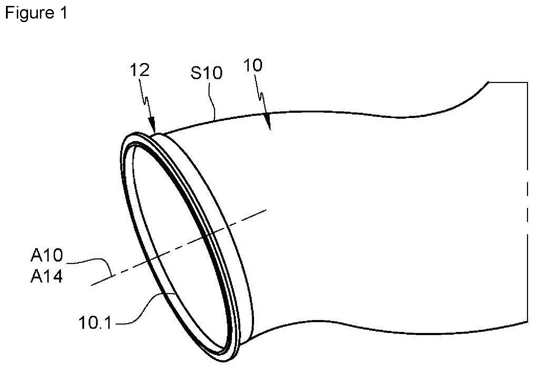

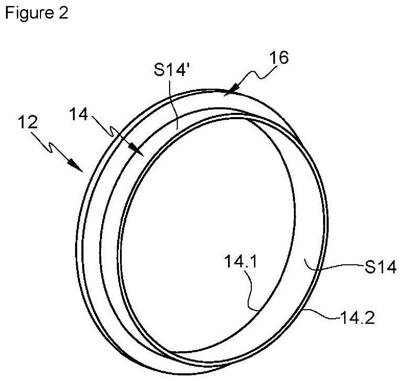

Selon un mode de réalisation visible sur les figures 1, 2 et 3, une canalisation comprend un conduit 10 qui présente au moins une première extrémité 10.1 ainsi qu'un embout de raccordement 12 situé autour du conduit 10, au niveau de sa première extrémité 10.1. Le conduit 10 comporte une surface extérieure S10 cylindrique qui présente un axe conduit A10.

L'embout de raccordement 12 comprend :
a. Un manchon 14 qui présente un axe manchon A14, une surface intérieure S14 orientée vers le conduit 10 ainsi qu'une surface extérieure S14' et qui s'étend entre des première et deuxième extrémités 14.1, 14.2,
b. une collerette 16 positionnée au niveau de la première extrémité 14.1 du manchon 14, en saillie par rapport à la surface extérieure S14'.

Selon un agencement, la première extrémité 14.1 du manchon 14 est légèrement en saillie par rapport à la première extrémité 10.1 du conduit 10.

Le conduit 10 et l'embout de raccordement 12 sont reliés par une couche de colle 18 intercalée entre le conduit 10 et l'embout de raccordement 12. Pour loger cette couche de colle 18, la surface intérieure S14 du manchon 14 est espacée de la surface extérieure S10 du conduit 10.

Pour obtenir une liaison optimale entre le conduit 10 et l'embout de raccordement 12, la couche de colle 18 doit présenter une épaisseur sensiblement constante sur la circonférence du conduit 10, les axes conduit et manchon A10, A14 devant être coaxiaux.

Selon un mode opératoire, un procédé d'assemblage du conduit 10 et de l'embout de raccordement 12 comprend une étape de préparation des surfaces extérieure et intérieure S10, S14 du conduit 10 et du manchon 14 en contact avec la couche de colle 18, une étape d'application d'une colle à l'état pâteux ou liquide sur au moins une surface parmi les surfaces intérieure et extérieure S10, S14, une étape de positionnement de l'embout de raccordement 12 autour du conduit 10 puis une étape de durcissement de la colle afin d'obtenir la couche de colle 18 et une liaison solide entre le conduit 10 et l'embout de raccordement 12.

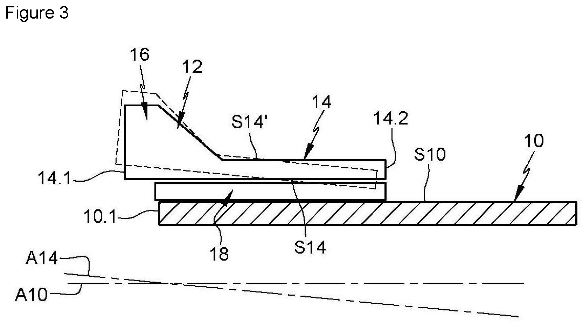

Selon ce mode opératoire, il est difficile de correctement positionner l'embout de raccordement 12 par rapport au conduit 10 lors de l'étape de positionnement et/ou l'embout de raccordement 12 peut bouger par rapport au conduit 10 lors de l'étape de durcissement. Dans les deux cas, à l'issue du procédé d'assemblage, l'embout de raccordement 12 n'est pas correctement positionné par rapport au conduit 10 si bien que les axes conduit et manchon A10, A14 ne sont pas coaxiaux (comme illustré sur la figure 3 en trait mixte) et/ou la couche de colle 18 ne présente pas une épaisseur sensiblement constante autour du conduit 10.

On connaît, notamment selon la demande de brevet US 2009/014121 A1, un dispositif qui présente un joint de tuyau composé d'un premier tuyau avec une cavité, d'un deuxième tuyau avec une section d'insertion, de canaux annulaires formant une rainure de clavetage, et d'un anneau annulaire à bride pour l'assemblage avec un adhésif. Cependant, cette solution ne répond pas de manière satisfaisante au problème de l'obtention, après un procédé d'assemblage simple, d'axes rigoureusement coaxiaux et d'un système de liaison par collage d'épaisseur parfaitement uniforme sur toute la circonférence sans recourir à des pièces annulaires additionnelles complexes.

On connaît, par ailleurs selon la demande de brevet EP 2 255 954 A1, un dispositif qui présente un assemblage mixte d'encliquetage et de collage d'extrémités de deux tubes, impliquant un emmanchement partiel, l'injection d'une colle, puis un emmanchement final provoquant l'encliquetage et la compression de la colle. Cependant, cette solution ne répond pas de manière satisfaisante au problème du maintien d'une coaxialité parfaite et de l'obtention d'une couche de colle d'épaisseur constante sans nécessiter un profil d'encliquetage nécessitant un effort d'insertion important.

On connaît, enfin selon la demande de brevet US 5 486 024 A, un dispositif qui présente un manchon pour joindre des extrémités de tuyaux, comportant des éléments annulaires pour centrer les tuyaux et sceller l'espace annulaire, ainsi qu'une saillie s'étendant radialement. Cependant, cette solution ne répond pas de manière satisfaisante au problème de l'aménagement de logements spécifiques délimités par des chants pour confiner des zones de colle d'épaisseur uniforme entre un conduit et un embout de raccordement de diamètres sensiblement identiques.

La présente invention vise à remédier à tout ou partie des inconvénients de l'art antérieur.

A cet effet, l'invention présente une canalisation comprenant :
a. au moins un conduit qui présente une première extrémité, au moins une surface extérieure et un premier axe,
b. au moins un embout de raccordement, positionné au niveau de la première extrémité du conduit, qui présente au moins une surface intérieure orientée vers le conduit et un deuxième axe,
c. au moins un système de liaison reliant le conduit et l'embout de raccordement et comportant au moins un logement positionné entre le conduit et l'embout de raccordement, autour du conduit, ledit logement étant configuré pour loger une zone de colle reliant le conduit et l'embout de raccordement, la surface extérieure du conduit et la surface intérieure de l'embout de raccordement présentent sensiblement le même diamètre ou le système de liaison comprenant une bague intercalaire intercalée entre le conduit et l'embout de raccordement, ladite bague intercalaire s'étendant tout autour du conduit, ayant une épaisseur sensiblement constante et présentant une première surface orientée vers le conduit et en contact avec la surface extérieure de ce dernier ainsi qu'une deuxième surface orientée vers l'embout de raccordement et en contact avec la surface intérieure de ce dernier,
d. le système de liaison comprenant une pluralité de logements régulièrement répartis autour du conduit, prévus au niveau de la surface extérieure du conduit et débouchant au niveau de la première extrémité du conduit, chaque ledit au moins un logement est étant délimité par au moins un chant intégré à au moins un élément parmi le conduit, l'embout de raccordement et ledit au moins un élément intercalaire et la bague intercalaire, conforme à la revendication 1.

Il ressort de cette revendication que le positionnement des logements sur la surface extérieure débouchant à la première extrémité du conduit facilite l'injection et la répartition homogène de la colle tout en garantissant un maintien coaxial optimal lors de l'assemblage.

Cette solution permet d'obtenir, après un procédé d'assemblage, des premier et deuxième axes coaxiaux et un système de liaison uniforme sur la circonférence du conduit.

Selon un mode de réalisation, les logements sont disjoints et espacés entre eux.

Selon un autre mode de réalisation, les logements sont reliés entre eux.

Selon une autre caractéristique, les logements sont délimités par un chant qui décrit une ondulation sur toute la circonférence du conduit ou de l'embout de raccordement.

D'autres caractéristiques et avantages ressortiront de la description de l'invention qui va suivre, description donnée à titre d'exemple uniquement, en regard des dessins annexés parmi lesquels :
La figure 1 est une vue en perspective d'une partie d'une canalisation illustrant un mode de réalisation de l'art antérieur,
La figure 2 est une vue en perspective d'un embout de raccordement illustrant un mode de réalisation de l'art antérieur,
La figure 3 est une coupe d'une partie de la canalisation visible sur la figure 1,
La figure 4 est une coupe longitudinale d'une partie d'une canalisation illustrant un mode de réalisation de l'invention,
La figure 5 est une vue en perspective d'un embout de raccordement illustrant un mode de réalisation de l'invention,
La figure 6 est une vue en perspective d'une partie d'un conduit illustrant un autre mode de réalisation de l'invention,
La figure 7 est une vue en perspective d'une bague intercalaire d'un système de liaison, reliant un conduit et un embout intercalaire, qui illustre un autre mode de réalisation de l'invention,
La figure 8 est une vue en perspective de la bague intercalaire, visible sur la figure 7, positionnée sur un conduit,
La figure 9 est une vue en perspective de la bague intercalaire et du conduit visible sur la figure 8 avant la mise en place d'un embout de raccordement,
La figure 10 est une coupe selon la ligne A de la figure 9 après la mise en place de l'embout de raccordement,
La figure 11 est une coupe selon la ligne B de la figure 9 après la mise en place de l'embout de raccordement,
La figure 12 est une vue en perspective d'un embout de raccordement équipé d'éléments intercalaires illustrant un autre mode de réalisation de l'invention,
La figure 13 est une vue en perspective d'un élément intercalaire illustrant un mode de réalisation de l'invention,
La figure 14 est une coupe dans un premier plan longitudinal d'une partie d'une canalisation comportant l'embout de raccordement et les éléments intercalaires visibles sur la figure 12,
La figure 15 est une coupe dans un deuxième plan longitudinal d'une partie d'une canalisation comportant l'embout de raccordement et les éléments intercalaires visibles sur la figure 12.

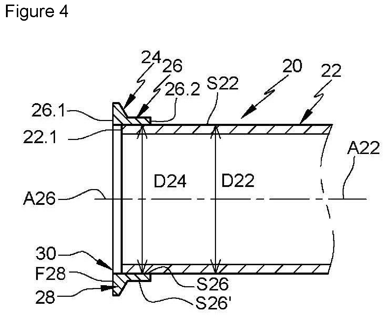

Selon un mode de réalisation visible sur la figure 4, une canalisation 20 comprend un conduit 22 qui présente au moins une première extrémité 22.1 ainsi qu'un embout de raccordement 24 situé autour du conduit 22, au niveau de sa première extrémité 22.1. Selon une application, la canalisation 20 est utilisée pour canaliser l'air d'un système d'air conditionné d'un aéronef. Bien entendu, l'invention n'est pas limitée à cette application.

Le conduit 22 comprend une surface extérieure S22 cylindrique qui présente un premier axe A22 et un premier diamètre D22 au niveau de la première extrémité 22.1.

L'embout de raccordement 24 comprend :
a. un manchon 26 qui présente un deuxième axe A26, une surface intérieure S26 cylindrique orientée vers le conduit 22 ainsi qu'une surface extérieure S26' et s'étend entre des première et deuxième extrémités 26.1, 26.2,
b. une collerette 28 positionnée au niveau de la première extrémité 26.1 du manchon 26, en saillie par rapport à la surface extérieure S26'.

Pour la suite de la description, une direction longitudinale est parallèle au premier ou deuxième axe A22, A26 et une direction radiale est perpendiculaire au premier ou deuxième axe A22, A26. Un plan longitudinal contient le premier ou deuxième axe A22, A26 et un plan transversal est perpendiculaire au premier ou deuxième axe A22, A26.

La collerette 28 présente une surface de contact F28 située dans un même plan transversal (perpendiculaire au deuxième axe A26) que la première extrémité 26.1 du manchon 26.

Selon un mode de réalisation, le conduit 22 est réalisé en un premier matériau, comme en matériau composite par exemple, et l'embout de raccordement 24 est réalisé en un deuxième matériau, différent du premier matériau, comme en alliage d'aluminium par exemple. Bien entendu, l'invention n'est pas limitée à ce mode de réalisation. Le conduit 22 et l'embout de raccordement 24 pourraient être réalisés dans le même matériau.

Selon un agencement, la première extrémité 22.1 du conduit 22 est située dans un même plan transversal que la première extrémité 26.1 du manchon 26. En variante, la première extrémité 26.1 du manchon 26 est en saillie par rapport à la première extrémité 22.1 du conduit 22.

Quel que soit le mode de réalisation, la canalisation 20 comprend :
a. au moins un conduit 22 qui présente une première extrémité 22.1, au moins une surface extérieure S22 et un premier axe A22,
b. au moins un embout de raccordement 24, positionné au niveau de la première extrémité 22.1 du conduit 22, qui présente au moins une surface intérieure S26 orientée vers le conduit 22 et un deuxième axe A26,
c. au moins un système de liaison 30 reliant le conduit 22 et l'embout de raccordement 24, ledit système de liaison 30 comprenant au moins une zone de colle 32 intercalée entre la surface extérieure S22 du conduit 22 et la surface intérieure S26 de l'embout de raccordement 24 et en contact avec ces dernières.

Selon des modes de réalisation visibles sur les figures 4, 5 et 6, la surface intérieure S26 de l'embout de raccordement 24 présente un deuxième diamètre D24 sensiblement égal au premier diamètre D22 de la surface extérieure S22 du conduit 22 de manière à permettre à l'embout de raccordement 24 d'être emmanché sans jeu sur le conduit 22. Ainsi, les premier et deuxième axes A22, A26 sont nécessairement sensiblement coaxiaux lorsque l'embout de raccordement 24 est positionné autour du conduit 22.

Selon les modes de réalisation visibles sur les figures 4, 5 et 6, au moins une surface parmi la surface extérieure S22 du conduit 22 et la surface intérieure S26 de l'embout de raccordement 24 comprend une pluralité de logements 34 positionnés tout autour du conduit 22, entre le conduit 22 et l'embout de raccordement 24, configurés pour loger de la colle de manière à former après durcissement de cette dernière des zones de colle 32.

Ces différents logements 34 sont régulièrement répartis tout autour du conduit 22. Ils sont sensiblement tous identiques. Ainsi, le système de liaison 30 est sensiblement uniforme tout autour du conduit 22.

Selon une configuration, tous les logements 34 débouchent au niveau d'une extrémité du conduit 22 et/ou de l'embout de raccordement 24.

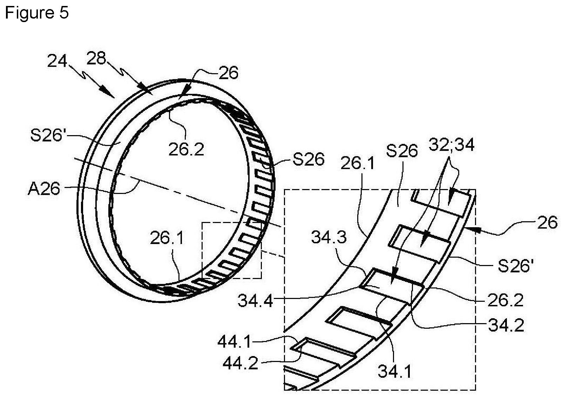

Selon une première variante visible sur la figure 5, les logements 34 sont disjoints et espacés entre eux. Chaque logement 34 forme une encoche délimitée par deux chants latéraux 34.1, 34.2 sensiblement parallèles au premier ou deuxième axe A22, A26, un chant transversal 34.3 reliant les chants latéraux 34.1, 34.2 ainsi qu'un fond 34.4 sensiblement parallèle à la surface extérieure ou intérieure S22, S26 du conduit 22 ou de l'embout de raccordement 24.

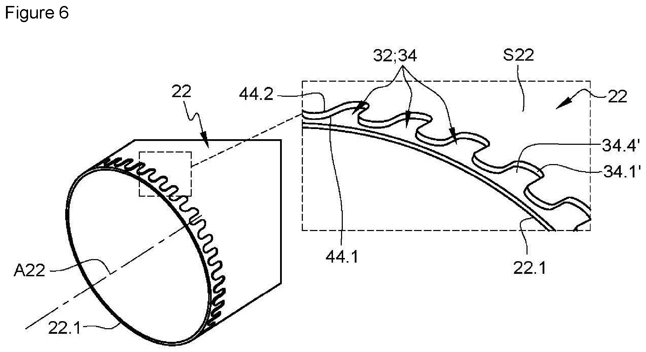

Selon une deuxième variante visible sur la figure 6, les logements 34 sont reliés entre eux. Ils sont délimités par un chant 34.1' qui décrit une ondulation sur toute la circonférence du conduit 22 ou de l'embout de raccordement 24 ainsi que par un fond 34.4' sensiblement parallèle à la surface extérieure ou intérieure S22, S26 du conduit 22 ou de l'embout de raccordement 24. Bien entendu, l'invention n'est pas limitée à ces deux variantes pour les logements 34. Ces derniers peuvent avoir d'autres formes.

Selon un premier mode de réalisation visible sur la figure 5, les logements 34 sont prévus au niveau de la surface intérieure S26 de l'embout de raccordement 24.

Selon un agencement, les logements 34 débouchent au niveau d'une extrémité de l'embout de raccordement 24 la plus éloignée de la première extrémité 22.1 du conduit 22, plus particulièrement au niveau de la deuxième extrémité 26.2 du manchon 26.

Selon un deuxième mode de réalisation visible sur la figure 6, les logements 34 sont prévus au niveau de la surface extérieure S22 du conduit 22.

Selon un agencement, les logements 34 débouchent au niveau de la première extrémité 22.1 du conduit 22.

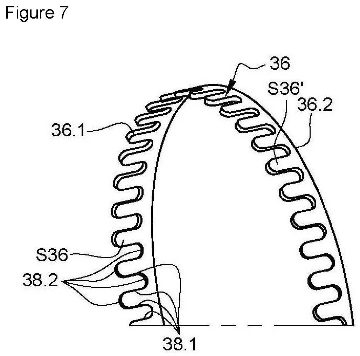

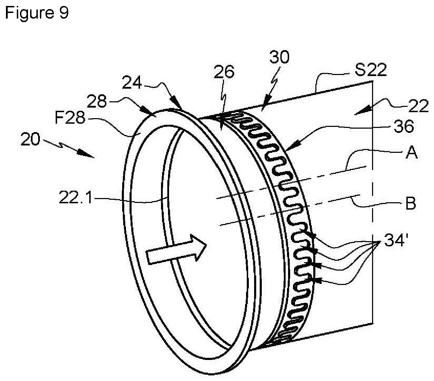

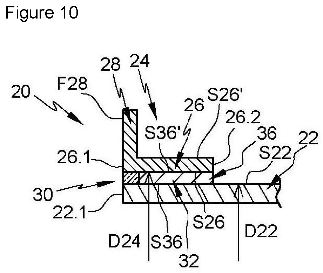

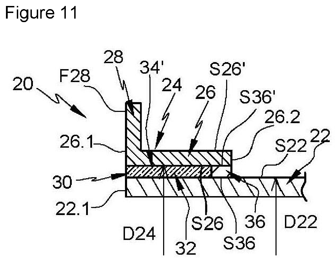

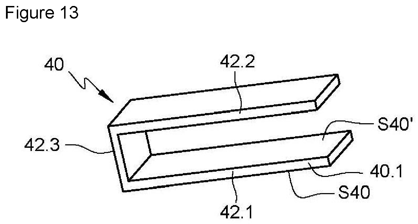

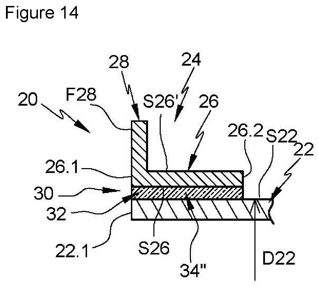

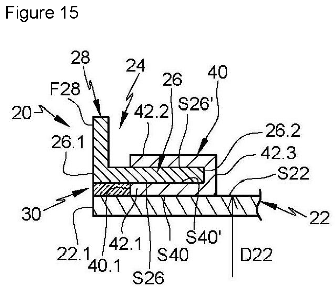

Selon des modes de réalisation visibles sur les figures 7 à 15, le système de liaison 30 comprend au moins un élément intercalaire 36, intercalé entre le conduit 22 et l'embout de raccordement 24, qui présente une première surface S36 orientée vers le conduit 22 et en contact avec la surface extérieure S22 de ce dernier ainsi qu'une deuxième surface S36' orientée vers l'embout de raccordement 24 et en contact avec la surface intérieure S26 de ce dernier.

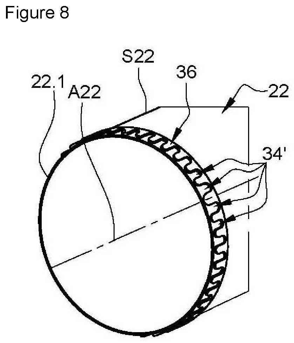

Selon un mode de réalisation visible sur les figures 7 et 8, le système de liaison 30 comprend une bague intercalaire 36, intercalée entre le conduit 22 et l'embout de raccordement 24, qui présente une première surface S36 orientée vers le conduit 22 et en contact avec la surface extérieure S22 de ce dernier ainsi qu'une deuxième surface S36' orientée vers l'embout de raccordement 24 et en contact avec la surface intérieure S26 de ce dernier.

Cette bague intercalaire 36 s'étend tout autour du conduit 22 et présente une épaisseur sensiblement constante sur toute sa circonférence. En fonctionnement, la bague intercalaire 36 étant simultanément en contact avec le conduit 22 et l'embout de raccordement 24 et présentant une épaisseur sensiblement constante sur sa circonférence, les premier et deuxième axes A22, A26 sont nécessairement sensiblement coaxiaux lorsque la bague intercalaire 36 est intercalée entre le conduit 22 et l'embout de raccordement 24.

Selon un mode de réalisation, la bague intercalaire 36 est obtenue en découpant une bande de matière qui présente un profil identique à celui de la bague intercalaire 36 et une longueur égale à la circonférence du conduit 22 puis en collant la bande de matière sur le conduit 22 avant d'emmancher l'embout de raccordement 24.

La bague intercalaire 36 s'étend entre des premier et deuxième chants 36.1, 36.2, le premier chant 36.1 étant plus proche de la première extrémité 22.1 du conduit 22 que le deuxième chant 36.2, les premier et deuxième chants 36.1, 36.2 reliant les première et deuxième surfaces S36, S36'. Le premier chant 36.1 comprend une pluralité d'encoches formant chacune un logement 34' configuré pour loger de la colle de manière à former après durcissement de cette dernière des zones de colle 32 reliant le conduit 22 et l'embout de raccordement 24.

Ces différents logements 34' sont régulièrement répartis tout autour du conduit 22. Ils sont sensiblement tous identiques. Ainsi, le système de liaison 30 est sensiblement uniforme tout autour du conduit 22.

Selon une configuration, le deuxième chant 36.2 est positionné dans un plan transversal perpendiculaire aux premier et deuxième axes A22, A26. Le premier chant 36.1 comprend de manière alternée des tronçons rectilignes 38.1 et des tronçons en demi-cercle 38.2. Selon cette configuration, chaque logement 34' est délimité par deux tronçons rectilignes 38.1 et un tronçon en demi-cercle 38.2 reliant les deux tronçons rectilignes 38.1. Bien entendu, l'invention n'est pas limitée à cette configuration pour les logements 34'. Ces derniers peuvent avoir d'autres formes.

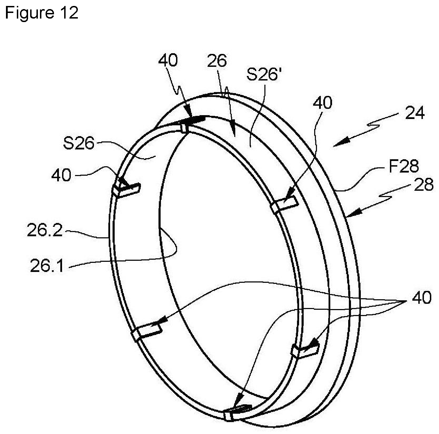

Selon un autre mode de réalisation visible sur les figures 12 à 15, le système de liaison 30 comprend plusieurs éléments intercalaires 40, au moins partiellement intercalés entre le conduit 22 et l'embout de raccordement 24, qui présentent chacun une première surface S40 orientée vers le conduit 22 et en contact avec la surface extérieure S22 de ce dernier ainsi qu'une deuxième surface S40' orientée vers l'embout de raccordement 24 et en contact avec la surface intérieure S26 de ce dernier. Chaque élément intercalaire 40 comprend au moins un chant 40.1 reliant les première et deuxième surfaces S40, S40'.

Les différents éléments intercalaires 40 sont régulièrement répartis sur la circonférence du conduit 22. A titre d'exemple, le système de liaison 30 comprend six éléments intercalaires 40. Bien entendu, l'invention n'est pas limitée à ce nombre d'éléments intercalaires 40.

Les différents éléments intercalaires 40 présentent une épaisseur (dimension prise pour chacun d'eux entre les première et deuxième surfaces S40, S40') identique. En fonctionnement, les différents éléments intercalaires 40 étant chacun simultanément en contact avec le conduit 22 et l'embout de raccordement 24 et présentant la même épaisseur, les premier et deuxième axes A22, A26 sont nécessairement sensiblement coaxiaux lorsque l'embout de raccordement 24 et les éléments intercalaires 40 sont positionnés autour du conduit 22.

Selon une configuration, les différents éléments intercalaires 40 sont tous identiques et présentent chacun une forme en U. Ainsi, chaque élément intercalaire 40 comprend des première et deuxième branches 42.1, 42.2 sensiblement parallèles entre elles ainsi qu'une base 42.3 reliant les première et deuxième branches 42.1, 42.2. En fonctionnement, les première et deuxième branches 42.1, 42.2 sont positionnées de part et d'autre de l'embout de raccordement 24, la base 42.3 étant en contact avec une extrémité de l'embout de raccordement 24 la plus éloignée de la première extrémité 22.1 du conduit 22, plus particulièrement avec la deuxième extrémité 26.2 du manchon 26.

Les différents éléments intercalaires 40, le conduit 22 et l'embout de raccordement 24 délimitent des logements 34" configurés pour loger de la colle de manière à former après durcissement de cette dernière des zones de colle 32 reliant le conduit 22 et l'embout de raccordement 24. Ces différents logements 34" sont régulièrement répartis tout autour du conduit 22.

Ils sont sensiblement tous identiques. Ainsi, le système de liaison 30 est sensiblement uniforme tout autour du conduit 22.

Bien entendu, l'invention n'est pas limitée à ces modes de réalisation pour le système de liaison 30. Quel que soit le mode de réalisation, le système de liaison 30 comprend au moins un logement 34, 34', 34" positionné entre le conduit 22 et l'embout de raccordement 24, autour du conduit 22, et configuré pour loger une zone de colle 32 durcie reliant le conduit 22 et l'embout de raccordement 24. Chaque logement 34, 34', 34" est délimité par au moins un chant 34.1, 34.2, 34.3, 34.1', 38.1, 40.1 intégré à au moins un élément parmi le conduit 22, l'embout de raccordement 24 et ledit au moins un élément intercalaire 36, 40.

Selon un agencement, chaque chant 34.1, 34.2, 34.3, 34.1', 38.1, 40.1 comprend un premier bord 44.1 faiblement espacé ou faisant partie du conduit 22 ainsi qu'un deuxième bord 44.2 décalé radialement par rapport au premier bord 44.1 faiblement espacé ou faisant partie de l'embout de raccordement 24. Pour la présente invention, on considère que deux éléments sont faiblement espacés si ces éléments sont espacés d'une distance inférieure à un dixième de millimètre.

Selon un mode de réalisation, le système de liaison comprend une pluralité de logements 34, 34', 34" régulièrement répartis autour du conduit 22. Les chants 34.1, 34.2, 34.3, 34.1', 38.1, 40.1 des différents logements 34, 34', 34" présentent sensiblement la même hauteur (dimension prise selon une direction radiale). Cette solution permet d'obtenir un système de liaison 30 uniforme sur la circonférence du conduit. Généralement, les logements sont sensiblement identiques.

Selon des premiers modes de réalisation, les surfaces extérieure et intérieure S22, S26 du conduit 22 et de l'embout de raccordement 24 présentent des diamètres sensiblement identiques. Selon ces premiers modes de réalisation, les chants 34.1, 34.2, 34.3, 34.1' des différents logements 34, 34', 34" sont intégrés au niveau du conduit 22 et/ou de l'embout de raccordement 24, les logements 34 étant prévus au niveau de la surface intérieure S26 de l'embout de raccordement 24 et/ou de la surface extérieure S22 du conduit 22.

Selon des deuxièmes modes de réalisation, le système de liaison 30 comprend au moins un élément intercalaire 36, 40, au moins partiellement intercalé entre le conduit 22 et l'embout de raccordement 24, configuré de manière à maintenir les premier et deuxième axes A22, A26 coaxiaux. Selon ces deuxièmes modes de réalisation, les chants 38.1, 40.1 des différents logements 34, 34', 34" sont intégrés au niveau du (ou des) élément(s) intercalaire(s) 36, 40. Ces deuxièmes modes de réalisation sont plus particulièrement adaptés pour les canalisations existantes qui comportent chacune un conduit avec une surface extérieure lisse (sans logement) et un embout de raccordement avec une surface intérieure lisse (sans logement) présentant un diamètre supérieur à celui de la surface extérieure du conduit.

## Revendications

1. Canalisation (20) comprenant :
- au moins un conduit (22) qui présente une première extrémité (22.1),
- au moins une surface extérieure (S22) et un premier axe (A22),
- au moins un embout de raccordement (24), positionné au niveau de la première extrémité (22.1) du conduit (22), qui présente au moins une surface intérieure (S26) orientée vers le conduit (22) et un deuxième axe (A26),
- au moins un système de liaison (30) reliant le conduit (22) et l'embout de raccordement (24) et comportant au moins un logement (34, 34', 34") positionné entre le conduit (22) et l'embout de raccordement (24), autour du conduit (22), ledit logement étant configuré pour loger une zone de colle (32) reliant le conduit (22) et l'embout de raccordement (24),
**caractérisée en ce que** la surface extérieure (S22) du conduit (22) et la surface intérieure (S26) de l'embout de raccordement (24) présentent sensiblement le même diamètre ou le système de liaison (30) comprend une bague intercalaire (36) intercalée entre le conduit (22) et l'embout de raccordement (24), ladite bague intercalaire (36) s'étendant tout autour du conduit (22), ayant une épaisseur sensiblement constante et présentant une première surface (S36) orientée vers le conduit (22) et en contact avec la surface extérieure (S22) de ce dernier ainsi qu'une deuxième surface (S36') orientée vers l'embout de raccordement (24) et en contact avec la surface intérieure (S26) de ce dernier, et **en ce que** le système de liaison comprend une pluralité de logements (34, 34', 34") régulièrement répartis autour du conduit (22), prévus au niveau de la surface extérieure (S22) du conduit (22) et débouchant au niveau de la première extrémité (22.1) du conduit (22), chaque ledit au moins un logement (34, 34', 34") est étant délimité par au moins un chant (34.1, 34.2, 34.3, 34.1', 38.1, 40.1) intégré à au moins un élément parmi le conduit (22), l'embout de raccordement (24) et ledit au moins un élément intercalaire (36, 40) et la bague intercalaire (36).

2. Canalisation (20) selon la revendication 1, **caractérisée en ce que** les logements (34) sont disjoints et espacés entre eux.

3. Canalisation (20) selon la revendication 1, **caractérisée en ce que** les logements (34) sont reliés entre eux.

4. Canalisation (20) selon la revendication précédente, **caractérisée en ce que** les logements sont délimités par un chant (34.1', 36.1) qui décrit une ondulation sur toute la circonférence du conduit (22) ou de l'embout de raccordement (24).
